# EUROPÄISCHE PATENTANMELDUNG

(11) **EP 0 591 907 A2**
(43) Veröffentlichungstag der Anmeldung: **13.04.1994**
(21) Anmeldenummer: 93116044.4
(22) Anmeldetag: 05.10.1993
(51) Int. Cl.: B22F 5/00, B22F 3/14, C04B 35/64

(54) **Verfahren zur Herstellung von Blech- oder Keramikplatten**

(30) Priorität: 09.10.1992 DE 4234004
(71) Anmelder: MTU MOTOREN- UND TURBINEN-UNION MÜNCHEN GMBH, D-80976 München (DE)
(72) Erfinder: Betz, Wolfgang, Dr., D-8035 Gauting (DE)

(57) **Zusammenfassung**

Die Erfindung betrifft ein Verfahren zur Herstellung von Blechen oder Keramikplatten wobei zunächst eine Schichtfolge bestehend aus einem Trennmedium und einer Produktpulverschicht in mehrfacher Folge erzeugt wird. Danach wird die Schichtfolge in eine gasdichte Kapsel gasdicht eingeschlossen. Anschließend erfolgt ein heißisostatisches Verpressen der Schichtfolge und schließlich werden nach Entfernen von Kapsel und Trennmedium die gefertigten Bleche oder Keramikplatten entnommen.

## Beschreibung

Die Erfindung betrifft ein Verfahren zur Herstellung von Blechen oder dünnen Keramikplatten.

Bisher werden Bleche, durch Walzen oder Schmieden hergestellt. Dabei wird von Metallblöcken ausgegangen, die abgegossen und zunächst umgeschmiedet werden oder es wird stranggegossenes Flachmaterial als Ausgangsmaterial für das Walzen von Blechen eingesetzt.

Beide Verfahren haben den Nachteil, daß hohe Umformgrade erforderlich sind, um aus der grobkörnigen Gußstruktur die feinkörnige Struktur eines Knetwerkstoffs herzustellen. Die hohen Umformgrade erfordern einen hohen Energieaufwand für die Verformungsschritte und die zwischengeschalteten Glühphasen. Dabei besteht die Gefahr einer oft unerwünschten Texturbildung und anderer Materialdefekte. Für spröde Speziallegierungen mit geringer Duktilität können hohe Umformgrade nicht realisiert werden, da sich vorher Risse im Material bilden.

Keramische Platten werden mittels Sinterverfahren hergestellt, wobei nachteilig ein hoher Anteil an Sinterzusätzen dem Keramikpulver zugegeben wird, der beim Sintern nur teilweise verdampft und teilweise in die Keramikplatten eingebaut wird. Dünne keramische Platten sind großflächig bisher nicht herstellbar.

Aufgabe der Erfindung ist es, ein gattungsgemäßes Verfahren anzugeben, mit dem Bleche ohne Verformungsschritte und zwischengeschaltete Glühphasen hergestellt werden können und Speziallegierungen geringer Duktilität als Blech oder dünne Keramikplatten aus hochreinem Material herstellbar werden.

Gelöst wird diese Aufgabe durch folgende Verfahrensschritte:
a) Erzeugen einer Schichtfolge bestehend aus einem Trennmedium und einer Produktschicht in mehrfacher Folge,
b) Einschließen der Schichtfolge in eine gasdichte Kapsel,
c) heißisostatisches Verpressen der Schichtfolge,
d) Entfernen von Kapsel und Trennmedium.

Dieses Verfahren hat den Vorteil, daß Bleche auch aus spröden Materialien herstellbar werden und die geforderte Feinkörnigkeit von Blechen ohne Umformarbeit und Glühschritte direkt über die Partikelgröße des Produktpulvers und die kristalline Feinkörnigkeit der Partikel eingestellt werden kann. Ein weiterer Vorteil des Verfahrens liegt in der Herstellung einer Stapelfolge von Blechen oder keramischen Platten mit einer den Abmessungen einer Heißisostatpresse angepaßten Flächenausdehnung. Dabei kann das Erzeugen der Schichtfolge bereits in einem evakuierten Behälter durchgeführt werden, sodaß Entgasen und Einstellen einer Reaktionsatmosphäre synchron mit dem Erzeugen der Schichtfolge erfolgt. Das hat den zusätzlichen Vorteil, daß die Pulverpartikel großflächig entgast werden können, bevor sie zwischen den Trennfolien eingeschlossen werden. Ein Entgasen nach dem Fertigen
der Schichtfolge kann nur noch über die verhältnismäßig kleinen Randflächen der Schichtfolge erfolgen.

Eine weitere Möglichkeit der Rationalisierung des Verfahrens besteht vorzugsweise im Einsatz von konditioniertem Produktpulver. Die Oberflächen der Partikel von konditioniertem Produktpulver sind contaminationsfrei und bereits entgast. Dieses Produktpulver wird bis zur Verarbeitung unter Inertgasatmosphäre oder in einem evakuiertem Behälter gelagert. Seine Verwendung hat den Vorteil, daß ein Entgasen der Schichtfolge nicht erforderlich ist.

Als Trennmedium werden vorzugsweise keramische oder metallische Pulver eingesetzt. Das hat den Vorteil einer vereinfachten Herstellung der Schichtenfolge, da nur abwechselnd Trennmedienpulver und Produktpulver auf eine formgebende Unterlage zu schütten sind. Vorzugsweise werden Oxide, Carbide, Nitride oder Titan-, Nickel- oder Kobaltbasislegierungen als Trennmedien eingesetzt. Oxide wie Zirkoniumoxid oder Aluminiumoxid haben den Vorteil, daß sie nicht mit Metallpulver als Produktpulver beim heißisostatischen Pressen reagieren. Gleiches gilt für Bornitrid, Borkarbid, Siliziumnitrid oder Siliziumkarbid, wenn das Produktpulver ein Metallpulver ist. Bei den metallischen Trennmitteln haben sich vorzugsweise derartige Metalle bewährt, die keine Verbindung mit dem Produktpulver beim heißisostatischen Pressen eingehen und deshalb nach dem heißisostatischen Pressen von den entstandenen Blechen oder Keramikplatten leicht abhebbar sind.

Bei metallischen Produktpulvern werden vorzugsweise als Trennmittel Metalle eingesetzt, die spröde Übergänge von intermetallischen Phasen mit den metallischen Produktpulvern bilden, so daß die entstandenen Metallbleche im Bereich der spröden Übergänge leicht abgesprengt werden können oder aufgrund unterschiedlicher Wärmedehnung beim Erkalten auseinander springen.

An Stelle von Pulvern als Trennmedien können vorzugsweise auch Folien oder Platten zwischen jeder Metallpulverlage eingebracht werden. Das Folienmaterial entspricht dem metallischen Trennpulvermaterial und an Stelle von Keramiktrennpulver werden Keramikplatten gleichen Materials eingesetzt.

Als Trennfolie hat sich vorzugsweise eine Stahlfolie bewährt, die zwischen 50 bis 500 µm dick ist.

Als weiteres bevorzugtes Trennmedium werden Beschichtungen auf Folien eingesetzt. Das hat den Vorteil, daß kostengünstiges metallisches Folienmaterial mit nicht reaktiven Beschichtungen belegt werden kann, die als Trennmedium dienen. Bevorzugt werden als derartige Beschichtungen Oxid-, Karbid- oder Nitridbeschichtungen eingesetzt.

Das Trennmedium richtet sich nach dem Produktmaterial, das mit diesem Verfahren hergestellt werden soll. Bei der Herstellung von Blechen aus Co- oder Ni-Basislegierungen wird vorzugsweise Titan als Trennmedium eingesetzt, da Titan mit diesen Basislegierungen spröde, intermetallische Phasen bildet, die ein Trennen erleichtern. Gleiche Vorteile ergeben Trennmedien aus Co- oder NiBasislegierungen, die vorzugsweise zur Herstellung von Titanblechen aus Titanpulver eingesetzt werden.

In einer bevorzugten Durchführung des Verfahrens wird zum Erzeugen der Schichtfolge zunächst ein Trennmedium auf eine formgebende Unterlage aufgebracht. Anschließend wird eine Produktpulverschicht auf das Trennmedium aufgebracht und diese Schichtkombination vervielfacht bis beispielsweise eine zylindrische Kapsel schichtweise befüllt ist. Nach gasdichtem Einschließen der Schichtfolge in diese Kapsel folgt das heißisostatische Verpressen. Dabei schrumpft die Kapsel und verdichtet die Schichtfolge, so daß aus dem Produktpulver zwischen dem Trennmedium entweder Bleche oder dünne keramische Platten gebildet werden, die anschließend aus der Kapsel entfernt werden.

Eine weitere bevorzugte Anwendung des Verfahrens sieht vor, daß zum Erzeugen der Schichtfolge Produktpulver zwischen formgebende Trennflächen, die als Trennmedium eingesetzt werden, geschüttet wird. Diese Schüttung kann auch durch Schlickerguß oder Rütteln erfolgen. Ein Vorteil dieser Verfahrensvariante ist, daß dicke Bleche oder Keramikplatten und kompliziert vorgeformte Bleche oder Keramikplatten wie beispielsweise Dome herstellbar werden, da die Ausbildung der Produktform den formgebenden Trennflächen folgt und eine Stapelfolge von Produkten mit identischer Formgebung entsteht.

Eine besonders wirtschaftliche Variante des Verfahrens besteht darin, daß zum Erzeugen der Schichtfolge ein flächig vorgepreßtes oder vorgesintertes Produktpulver eingesetzt wird. Dadurch wird der anschließende Aufwand beim heißisostatischen Verpressen vermindert und es lassen sich eine erhöhte Anzahl von Blechen oder Keramikplatten mit einem heißisostatischen Pressvorgang erzeugen.

Zum Erzeugen der Schichtfolge wird vorzugsweise ein Metallpulver als Produktpulver zwischen zwei Metallfolien, die sich mit dem Metallpulver verbinden sollen, eingeschlossen. Beim heißisostatischen Pressvorgang entsteht daraus vorteilhaft ein Verbundblech mit unterschiedlicher Körnung im Innern und an den Oberflächen.

Im Prinzip können mit dem erfindungsgemäßen Verfahren vorteilhaft die unterschiedlichsten Blech- oder Keramikplattenqualitäten hergestellt werden. Für Massenprodukte können aus der Produktpulverschicht sowohl chemich als auch kristallographisch äußerst homogene Bleche oder Keramikplatten erzeugt werden.

Es lassen sich aber auch durch unterschiedlich strukturierte Produktpulverpartikel und schichtweise Anordnung dieser Partikel innerhalb der Produktpulverschicht Spezialbleche oder - Keramikplatten herstellen. Durch chemisch unterschiedliche Pulver lassen sich dispersionsgehärtete Bleche herstellen, die beispielsweise keramische Dispersate enthalten, oder es können faserverstärkte Verbundbleche, die beispielsweise in einem spröden Metallpulver aus intermetallischen Phasen elastische Titanfasern aufweisen, hergestellt werden.

Durch Flamm- oder Plasmaspritzen wird vorzugsweise ein flächiges Trennmedium mit Produktpulver beschichtet und anschließend zu einer Schichtfolge gestapelt. Das hat den Vorteil einer Vorverdichtung des Produktpulvers und einer vereinfachten Herstellung der Schichtfolge.

Das Erzeugen der Schichtfolge wird vorzugsweise unter Reaktionatmosphäre oder bei vermindertem Druck durchgeführt, sodaß ein hochreines Einschließen der Schichtfolge in eine Kapsel möglich wird. Auch beim gasdichten Einschließen wird vorzugsweise die Reaktionsatmosphäre beibehalten. Wird als Reaktionsatmosphäre ein Hochvakuum gefordert, so erfolgt das Einschließen der Schichtfolge vorzugsweise in einer evakuierten Kapsel.

Wird kein konditioniertes Produktpulver eingesetzt, so wird vorzugsweise die Schichtfolge in einer Vakuumkammer entgast und in eine gasdichte Kapsel eingeschlossen, nachdem eine Reaktionsatmosphäre erzeugt wurde.

Zum Entgasen der Schichtfolge kann diese in eine evakuierbare schrumpfbare Kapsel eingebracht werden. Anschließend wird die Kapsel bei Entgasungstemperatur evakuiert. Danach wird die Schichtfolge in der Kapsel gasdicht eingeschlossen. Die Entgasungstemperatur hängt von der Verdampfungs- und Desorptionstemperatur flüchtiger Bestandteile des Metallpulvers ab. Vorzugsweise liegt sie zwischen 90 und 500 °C. Dieses Verfahren hat den Vorteil, daß die entgaste und gasdicht verschlossene Kapsel aus schrumpfbarem Material unmittelbar nach der Entgasung und Evakuierung in eine Heißisostatpresse verbracht werden kann, in der Kapsel und Schichtfolge gemeinsam schrumpfen.

Eine andere bevorzugte Durchführung des Verfahrens sieht vor, daß die Schichtfolge in einer Vakuumkammer entgast und die Ränder der Trennfolien gasdicht verbunden werden. Bei diesem Entgasen wird die Schichtfolge ebenfalls erwärmt, um flüchtige Bestandteile oder Luftfeuchte abpumpen zu können. Der Vorteil ist, daß keine zusätzliche Kapsel erforderlich wird und ein gasdichtes Verschließen der Schichtfolge durch das gasdichte Verbinden der Ränder der Trennfolie nach dem Entgasen erfolgt, so daß die Schichtfolge der Vakuumkammer als geschlossene Einheit entnommen und einem hießisostatischen Pressen ausgesetzt werden kann. Die gasdichte Verbindung der Ränder der Trennfolie erfolgt vorzugsweise durch Vakuumverschweißen.

Zur Distanzhalterung der Trennfolien oder zur Vorbereitung eines gasdichten Verbindens der Trennfolienränder werden an den Rändern der Trennfolie Distanzstücke aus Trennfolienmaterial eingebracht. Als Distanzstücke werden vorzugsweise Rohre, U-Profile, V-Profile oder L-Profile eingesetzt. Diese müssen so bemessen sein, daß sie sich beim heißisostatischen Pressen auf die Dicke der Bleche oder Keramikplatten zusammenpressen lassen und für das gasdichte Einschließen entsprechende Materialeigenschaften aufweisen.

Ein bevorzugtes Einschließen besteht in der Verschweißung von Distanzprofilen mit den Rändern der Trennfolie, nachdem die Schichtfolge entgast ist.

Um die Pulverschüttung auf einer Trennfolie seitlich zu begrenzen oder beim gasdichten Verbinden der Ränder der Trennfolie eine Verbindungsnaht, wie Schweißnaht einzusparen werden vorzugsweise die Ränder der Trennfolie vor der Erzeugung einer Schichtfolge umgebördelt.

An das Material der Trennfolie werden hohe Anforderungen gestellt. Einerseits soll sie formstabil zumindest als produktpulverbelegte Trennfolie sein, andererseits soll sie beim heißisostatischen Pressen schrumpfbar sein. Schließlich soll sie sich mit dem Produktpulver in der Schichtfolge in einer bevorzugten Ausbildung des Verfahrens nicht verbinden, so daß sie leicht von der gefertigten Blechen oder Keramikplatten abziehbar ist.

Als bevorzugter Werkstoff wird dazu eine beidseitig beschichtete Stahlfolie eingesetzt. Eine wenige Mikrometer dünne vorzugsweise nichtmetallische Beschichtung sorgt für die Trennbarkeit der Stahlfolie von der Blechtafel.

Auch einseitig beschichtete Stahlfolien sind einsetzbar. Sollten sie einseitig mit den Blechen oder Keramikplatten nach dem heißisostatischen Prozess verbunden bleiben, so können sie vorteilhaft nach dem Entfernen der Kapsel großflächig und schnell
von den einzelnen Blechen oder Keramikplatten selektiv abgeätzt werden, falls sie die Bleche nicht oberflächig schützen sollen. Bei beidseitiger Verbindung zwischen Produkt und Trennfolie ist ein mechanisches Zerlegen des Stapels nicht möglich, so daß ein selektives Ausätzen der Trennfolie aus der Schichtfolge erforderlich wird um das Trennmedium zu entfernen.

Die Bleche oder Keramikplatten können nach dem Entfernen von Kapsel und Trennmedium zu Bauteilen weiterverarbeitet werden oder zunächst eine Oberflächenveredelung durchlaufen. Wird eine Kaltverfestigung in den Blechen angestrebt oder eine Kalibrierung der Blechstärke oder eine Oberflächenglättung, so kann dieses mit wenigen Walzstichen und ohne Zwischenglühen erreicht werden.

Die Blech- oder Keramikplattendicke nach dem heißisostatischen Pressen und die Dicke der Produktpulverschüttung hängen von der Dichte des Bleches oder der Keramikplatte nach dem heißisostatischen Pressen und der Schüttdichte oder Rütteldichte des Metallpulvers ab, so daß nicht nur die Korngröße durch das Produktpulver, sondern auch die Blech- oder Keramikplattenstärke vorgegeben werden kann. Es ist vorzugsweise eine Partikelgröße des Produktpulvers einzusetzen, die kleiner als die Blech- oder Keramikplattenstärke ist. Ein Bereich zwischen 1 µm und 500 µm für den mittleren Partikeldurchmesser hat sich bewährt.

Eine bevorzugte Anwendung finden diese pulvermetallurgisch hergestellten Bleche oder Keramikplatten im Flugzeug- und Triebwerksbau als Halbzeug für Turbinengehäuse oder Ringbrennkammerwände oder andere thermisch hochbelastete Düsenwände und Klappen.

Die folgenden Figuren zeigen Ausbildungen der Erfindung.
Fig. 1 zeigt das Erzeugen einer Schichtfolge für dünne Bleche
Fig. 2 zeigt das Erzeugen einer Schichtfolge für dicke Bleche

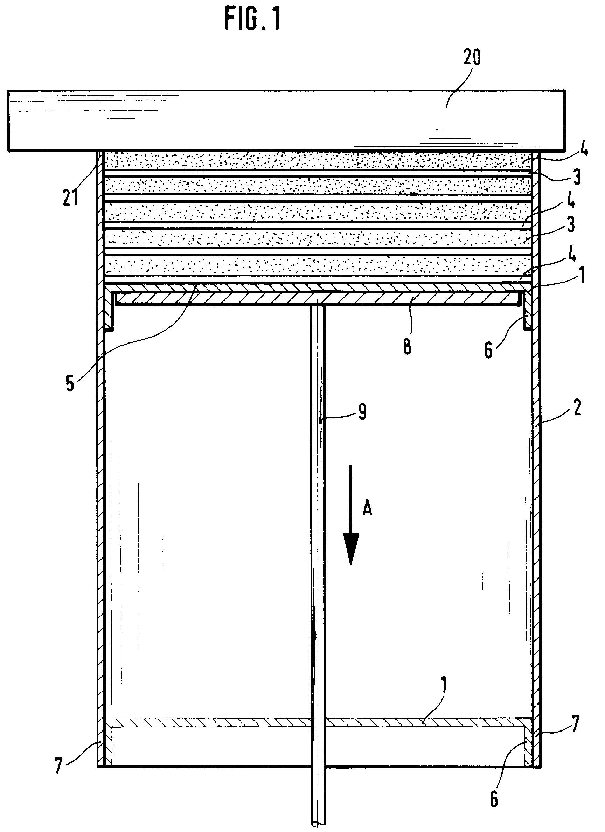

Fig. 1 zeigt das Erzeugen einer Schichtfolge (3/4) für dünne Bleche oder Keramikplatten mit dem erfindungsgemäßen pulvermetallurgischen Verfahren. Dazu wird ein Hubkolben 8 der einen zylindrischen Boden 1 aus Kapselblechmaterial in einem Zylinder 2 aus Kapselblechmaterial trägt, stufenweise abwärts gefahren. Der Spalt zwischen zylindrischen Boden 1 und Zylinder 2 kann durch eine Dichtlippe abgedichtet sein. Der Hubkolben 8 wird um die Dicke des Trennmediums 3 in Pfeilrichtung A abwärts gefahren. Auf den zylindrischen Boden 1 als formgebende Unterlage 5 wird das Trennmedium 3, das in diesem Beispiel ein Trennpulver ist, eingebracht. Der Hubkolben 8 wird anschließend um die Dicke der Produktschicht 4 abgesenkt und das Produktmedium aufgebracht. In abwechselnder Folge entsteht so auf dem formgebenden Kapselboden 5 im Zylinder 2, der den Kapselmantel bildet, eine Schichtfolge (3/4) mit Kreisflächen. Jede Pulverschicht wird vor dem stufenweisen Absenken des Hubkolbens 8 mittels eines Abstreiflineals 20, das entlang der Oberkante 21 des Zylinders 2 geführt wird, glatt gestrichen.

Sobald der gesamte Zylinder 2 mit der Schichtfolge (3/4) befüllt ist, wird der umgebördelte Rand 6 des zylindrischen Bodens 1 mit dem unteren Zylinderende 7 gasdicht verbunden und ein Deckel (nicht gezeichnet) mit Abpumpstutzen auf die Schichtfolge aufgesetzt und das obere Ende des Zylinders gasdicht mit dem Deckel verschlossen. Über den Abpumpstutzen wird die Kapsel und die Schichtfolge evakuiert und der Abpumpstutzen gasdicht verschlossen. Danach wird die gasdichte Kapsel aus Kapselboden 1 Zylinder 2 und Deckel mit eingeschlossener Schichtfolge in eine Heißisostatpresse verbracht. Dort auf Reaktionstemperatur aufgeheizt und heißisostastisch gepreßt.

Beim heißisostatischen Verpressen schrumpft die Kapsel. Das Produktmedium 4 verdichtet sich zu einem Metallblech, wenn Metallpulver eingesetzt wird oder zu einer Keramikplatte, wenn Keramikpulver verwendet wird. Das Trennpulver, das bei der Herstellung von einem Blech aus Ni-Basislegierung aus Zirkoniumoxidpulver besteht, sorgt dafür, daß die Bleche nicht untereinander verschweißen. Nach dem heißisostatischen Verpressen bei 1100°C unter 200MPa Druck für 4 Stunden wird die Kapsel entfernt und kreisförmige Bleche aus einer Ni-Basislegierung liegen nach dem Entfernen der Kapsel als Blechstapel vor.

Komplexere Produktschichten, wie sie für Verbundbleche oder Verbundkeramiken erforderlich werden, können mit diesem Verfahren dadurch hergestellt werden, daß innerhalb der Produktschicht unterschiedliche Schichtfolgen eingebracht werden oder daß Pulverschüttungen mit Folienlagen, Filzlagen, Faserlagen oder Geweben innerhalb der Produktschicht abwechseln.

Entsprechend Tabelle 1 sind mit diesem Verfahren weitere Produktpulvermischungen zu Metallblechen oder auch Keramikplatten verarbeitbar. Mögliche Produktpulvermischungen sind unter der Spalte Produktmedium sowie geeignete Trennmaterialien unter der Spalte Trennmedium aufgelistet. Die Verfahren zum Trennen der gefertigten Bleche oder Keramikplatten und zum Entfernen der Trennmedien sind unter der Spalte Trennvorgang aufgeführt.

**TABELLE 1**

| Produktmedium | Trennmedium (Pulver, Platten, Folien) | | Trennvorgang |
|---|---|---|---|
| Ni-Basislegierung | Stahllegierung oder beschichteter Stahl | | chemisch |
| Co-Basislegierung | | | mechanisch |
| Ni-Basislegierung | Ti-Basislegierung | | nach Bildung spröder Phasen an Übergängen, mechanisch |
| | Al-Basislegierung | | |
| Ti-Basislegierung | Ni-Basislegierung | | nach Bildung spröder Phasen an Übergängen, mechanisch |
| | Stahllegierung | | |
| Metalle | Keramik | | chemisch durch alkalisch heißen Aufschluß |
| | wie | Oxide, | |
| | | Nitride, | |
| | | Karbide. | |
| Keramiken | Metalle | | elektrochemisch |

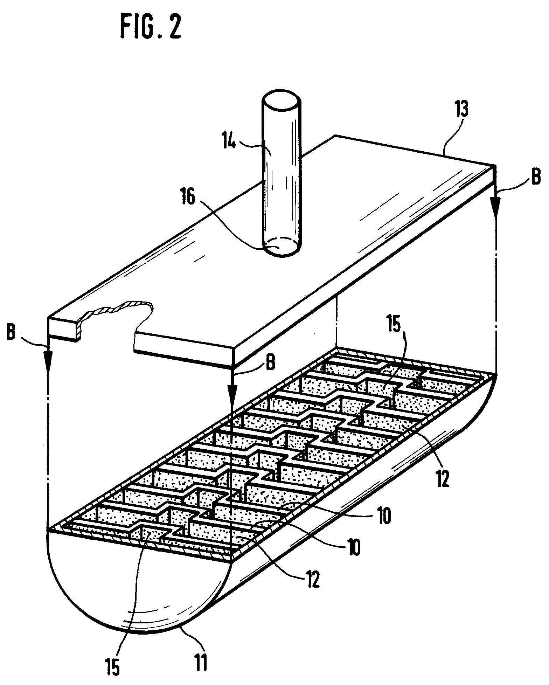

Fig. 2 zeigt das Erzeugen einer Schichtfolge für dicke Bleche oder Keramikplatten. Bei dieser Verfahrensvariante ist es nicht erforderlich, daß die Produktflächen eben sind. Durch die Gestaltung der formgebenden Trennflächen 10 können in weiten Grenzen Krümmungen und Dickenvariationen wie beispielsweise bei Wellblechformen, Sicken oder noppenförmigen Ausbuchtungen realisiert werden.

Dazu werden in diesem Beispiel formgebende halbkreisförmige Trennflächen 10 aus 0.5 mm dickem Stahlblech in einen Halbzylinder 11 aus Kapselmaterial gestellt. Die Trennflächen 10 weisen in diesem Beispiel formgebende Ausbuchtungen 15 aus. Der Halbzylinder 11 ist an seinen Stirnseiten gasdicht verschlossen. Ein Deckel 13 mit Abpumpstutzen 14 wird in Pfeilrichtung B auf den Halbzylinder 11 gesetzt und mit diesem gasdicht verbunden, so daß eine halbzylindrische Kapsel entsteht.

Über den Abpumpstutzen 14 wird die Kapsel evakuiert und mit Produktpulver 12 beschickt. Die Zwischenräume zwischen den Trennflächen 10 werden dabei derart mit Produktpulver 12 verfüllt, daß eine Schichtfolge (10/12) aus Trennflächen 10 und Produktpulver 12 erzeugt wird. Anschließend wird der Abpumpstutzen 14 entfernt, nachdem die Öffnung 16 im Deckel 13 gasdicht verschlossen wurde.

Zwei derartige halbzylindrische Kapseln können gleichzeitig in einer Heißisostatpresse heißisostatisch verdichtet werden. Abschließend werden die Kapseln beispielsweise durch Schleifen entfernt. Die Trenn flächen 11, die beispielsweise aus 0,5 mm Stahlblech bestehen, werden ausgeätzt und beispielsweise 2 mm dicke mit einer Ausbuchtung 15 versehene halbkreisflächige identische Bleche aus einer Ni-Basislegierung entnommen.

## Patentansprüche

1. Verfahren zur Herstellung von Blechen oder Keramikplatten, gekennzeichnet durch folgende Verfahrensschritte:
a) Erzeugen einer Schichtfolge (3/4, 10/12) bestehend aus einem Trennmedium (4, 10) und einer Produktschicht (3, 12) in mehrfacher Folge, wobei das Trennmedium (4, 10) mittels Aufschütten von Pulvern zwischen den Produktschichten (3, 12) oder mittels Beschichten von Folien oder mittels Formgeben von Folien oder Platten aus Eisen-, Titan-, Kobalt- oder Nickelbasislegierungen hergestellt wird.
b) Einschließen der Schichtfolge (3/4, 10/12) in eine gasdichte Kapsel,
c) heißisostatisches Verpressen der Schichtfolge (3/4, 10/12),
d) Entfernen von Kapsel und Trennmedium (3, 10)

2. Verfahren nach Anspruch 1, dadurch gekennzeichnet, daß als Trennmedium (4) keramische oder metallische Pulver eingesetzt werden, vorzugsweise Oxide, Karbide, Nitride oder Titan-, Nickel- oder Kobaltbasislegierungen.

3. Verfahren nach Anspruch 1, dadurch gekennzeichnet, daß als Trennmedium (3, 10) Folien oder Platten eingesetzt werden.

4. Verfahren nach einem der Ansprüche 1 bis 3, dadurch gekennzeichnet, zeichnet, daß als Trennmedium (3, 10) eine Stahlfolie eingesetzt wird

5. Verfahren nach Anspruch 1, dadurch gekennzeichnet, daß als Trennmedium (3, 10) Beschichtungen auf Folien eingesetzt werden.

6. Verfahren nach Anspruch 1 oder 5, dadurch gekennzeichnet, daß als Trennmedium (3, 10) Oxid-, Karbid- oder Nitridbeschichtungen auf Folien eingesetzt werden.

7. Verfahren nach einem der Ansprüche 1 bis 6, dadurch gekennzeichnet, daß zur Herstellung von Blechen aus Co- oder Ni-Basislegierungen als Trennmedium (3, 10) Titan eingesetzt wird.

8. Verfahren nach einem der Ansprüche 1 bis 6, dadurch gekennzeichnet, daß zur Herstellung von Blechen aus Titan als Trennmedium (3, 10) Co- oder Ni-Basislegierungen eingesetzt werden.

9. Verfahren nach einem der Ansprüche 1 bis 8, dadurch gekennzeichnet, daß zum Erzeugen der Schichtfolge (3/4, 10/12) zunächst ein Trennmedium (3, 10) auf eine formgebende Unterlage (5) aufgebracht wird, anschliessend eine Produktschicht (4, 12) aus Pulver aufgebracht wird und diese Schichtkombination vervielfacht wird.

10. Verfahren nach einem der Ansprüche 1 bis 8, dadurch gekennzeichnet, daß zum Erzeugen der Schichtfolge (10/12) Produktpulver (12) zwischen formgebenden Trennflächen (10), die als Trennmedium (3, 10) eingesetzt werden, geschüttet wird.

11. Verfahren nach einem der Ansprüche 1 bis 10, dadurch gekennzeichnet, daß zum Erzeugen der Schichtfolge (3,/4, 10/12) ein flächig vorgepreßtes oder vorgesintertes Produktpulver (4, 12) eingesetzt wird.

12. Verfahren nach einem der Ansprüche 1 bis 11, dadurch gekennzeichnet, daß zum Erzeugen der Schichtfolge (3/4, 10/12) ein Metallpulver als Produktpulver (4, 12) zwischen zwei Metallfolien eingeschlossen wird.

13. Verfahren nach einem der Ansprüche 1 bis 12, dadurch gekennzeichnet, daß zum Erzeugen der Schichtfolge (3/4, 10/12) ein flächiges Trennmedium (10) mit Produktpulver (4, 12) durch Flammoder Plasmaspritzen beschichtet wird.

14. Verfahren nach einem der Ansprüche 1 bis 13, dadurch gekennzeichnet, daß zur Erzeugung der Schichtfolge (3/4, 10/12) ein konditioniertes Produktpulver (4, 12) eingesetzt wird.

15. Verfahren nach einem der Ansprüche 1 bis 14, dadurch gekennzeichnet, daß die Erzeugung der Schichtfolge (3/4, 10/12) unter Reaktionsatmosphäre erfolgt.

16. Verfahren nach einem der Ansprüche 1 bis 15, dadurch gekennzeichnet, daß das Einschließen der Schichtfolge (3/4, 10/12) in eine gasdichte Kapsel unter Reaktionsatmosphäre oder in einem evakuierten Behälter erfolgt.

17. Verfahren nach nach Anspruch 1 bis 16, dadurch gekennzeichnet, daß die Schichtfolge (3/4, 10/12) in einer Vakuumkammer entgast und in eine gasdichte Kapsel eingeschlossen wird.
